# EUROPÄISCHE PATENTSCHRIFT

(11) **EP 4 413 241 B1**
(45) Veröffentlichungstag und Bekanntmachung des Hinweises auf die Patenterteilung: **20.08.2025**
(21) Anmeldenummer: 22786358.6
(22) Anmeldetag: 22.09.2022
(51) Int. Cl.: F01N 3/28, F01N 3/20

(54) **ELEKTRISCH BEHEIZBARER WABENKÖRPER MIT WELLLAGEN UNTERSCHIEDLICHER ZELLDICHTE**
ELECTRICALLY HEATABLE HONEYCOMB STRUCTURE HAVING CORRUGATED LAYERS OF DIFFERENT CELL DENSITY
STRUCTURE EN NID D'ABEILLES POUVANT ÊTRE CHAUFFÉE ÉLECTRIQUEMENT DOTÉE DE COUCHES ONDULÉES À DENSITÉ CELLULAIRE DIFFÉRENTE

(30) Priorität: 05.10.2021 DE 102021211213
(43) Veröffentlichungstag der Anmeldung: 14.08.2024
(73) Patentinhaber: Schaeffler Technologies AG & Co. KG, 91074 Herzogenaurach (DE)
(72) Erfinder: BRÜCK, Rolf, 80687 München (DE); HIRTH, Peter, 80687 München (DE)
(74) Vertreter: Vitesco Technologies
(86) Internationale Anmeldenummer: PCT/EP2022/076425
(87) Internationale Veröffentlichungsnummer: WO 2023/057229

(56) Entgegenhaltungen:
- EP-A1- 0 507 216
- US-A- 5 070 694
- US-A1- 2015 030 509

## Beschreibung

### Technisches Gebiet

Die Erfindung betrifft einen Wabenkörper für einen elektrisch beheizbaren Katalysator in einer Abgasstrecke, mit einer Mehrzahl von entlang einer Hauptdurchströmungsrichtig durchströmbaren Strömungskanälen, wobei der Wabenkörper aus einer Mehrzahl von zu einem Lagenstapel aufeinandergestapelten Metallfolien gebildet ist, der um zumindest einen Drehpunkt aufgewickelt ist, wobei der Lagenstapel zumindest eine erste Metallfolie aufweist, welche eine erste Wellung aufweist, und weiterhin zumindest eine zweite Metallfolie aufweist, welche ein zweite Wellung aufweist, wobei die erste Metallfolie und die zweite Metallfolie jeweils erste und zweite Welllagen ausbilden, wobei der Wabenkörper eine Mehrzahl von Wicklungslagen aufweist, die im aufgewickelten Zustand durch einen Luftspalt zueinander in radialer Richtung des Wabenkörpers beabstandet sind, wobei die erste Wellung ungleich der zweiten Wellung ist.

### Stand der Technik

Zur Aufheizung von Abgasen einer Verbrennungskraftmaschine werden unter anderem elektrische Heizer verwendet. Dieser helfen die Abgastemperatur schnell auf eine vorgegebene Mindesttemperatur zu erhitzen, um eine möglichst schnelle und möglichst vollständige Abgasnachbehandlung innerhalb einer Abgasstrecke sicherstellen zu können. Die Mindesttemperatur resultiert aus den sogenannten Light-Off Temperaturen der in der Abgasstrecke verwendeten Katalysatoren zur Abgasnachbehandlung. Die katalytisch aktive Beschichtung der verwendeten Wabenkörper bedingt eine solche Mindesttemperatur um den Prozess der chemischen Umwandlung möglichst vollständig ablaufen lassen zu können.

Eine bekannte Form für einen elektrischen Heizer ist ein metallischer Wabenkörper, welcher mit einer Spannungsquelle verbunden ist. Durch die Bestromung des Wabenkörpers wird unter Ausnutzung des Ohmschen Widerstands Hitze erzeugt. Diese wird an das strömende Abgas und teilweise auch an die umliegenden Strukturen abgegeben, wodurch eine Aufheizung erreicht wird.

Die metallischen Wabenkörper sind aus einer Mehrzahl von unterschiedlichen metallischen Folien gebildet. Hierbei kommen glatte Metallfolien und Metallfolien, die ganz oder teilweise strukturiert sind, zum Einsatz. Durch das Aufeinanderstapeln von diesen metallischen Folien wird ein Lagenstapel erzeugt. Dieser Lagenstapel wird im Nachgang durch ein geeignetes Werkzeug um sogenannte Wickeldorne aufgewickelt, wodurch ein zumeist scheibenförmiger Wabenkörper ausgebildet wird, welcher eine Mehrzahl entlang einer Hauptdurchströmungsrichtung durchströmbarer Strömungskanäle ausbildet.

Die einzelnen Wicklungen des Lagenstapels sind in der fertigen Heizscheibe zueinander durch einen Luftspalt beabstandet, um einen Kurzschluss zwischen unterschiedlichen Stellen der Heizscheibe zu verhindern und einen definierten Strompfad entlang der Länge des Lagenstapels auszubilden.

Die US 2015/030509 A1 offenbart eine elektrisch beheizbare Wabenkörperbaugruppe, welche eine elektrische Verbindung von Blechlagen an einem Verbindungsstift umfasst. Ein Wabenkörper hat einen Metallmantel mit einem Innenumfang, durch den der Verbindungsstift in einer Buchse geführt und elektrisch isoliert ist. Die Blechlagen sind abwechselnd grob strukturierte und fein strukturierte oder glatte Bleche, die zusammen einen Stapel mit oberster und unterster Lage und Kanälen für eine axiale Gasströmung zwischen den Lagen bilden. Der Verbindungsstift verläuft radial annähernd senkrecht zu den Lagen und ist mit mindestens zwei oder allen Lagen durch mindestens ein Zwischenstück metallisch verbunden.

Die US 5 070 694 A offenbart einen verbesserten elektrisch beheizbaren Kern für einen elektrisch beheizbaren Katalysator. Der Kern ist gekennzeichnet durch eine Vielzahl von gewellten dünnen Metallstreifen, die an einem elektrisch leitenden zentralen Kern oder Rohr befestigt sind. Abwechselnd mit den gewellten dünnen Metallstreifen sind schmale Streifen aus Hartmetall in einem axial versetzten Muster angeordnet. Diese Streifen werden spiralförmig gewickelt und verschmolzen, um sie zu einem einheitlichen Monolithen zusammenzulöten. Der Kern wird in einem Gehäuse untergebracht, das mit isolierten Mitteln ausgestattet ist, um den Monolithen mit elektrischem Strom zu versorgen und zu erwärmen.

Die EP 0 507 216 A1 offenbart ein Kernelement für einen elektrisch beheizbaren Katalysator und ein elektrisch beheizbarer Katalysator, der dieses enthält. Das Kernelement ist durch einen gewellten dünnen Metallfolienstreifen, vorzugsweise in Fischgrätenform, und in laminarer Beziehung dazu einen flachen dünnen Metallfolienstreifen aus entweder rostfreiem Stahl oder Hartlötmetall oder einer Kombination aus beiden gekennzeichnet. Wobei der flache dünne Metallfolienstreifen eine geringere Breite als die Breite des gewellten dünnen Metallfolienstreifens aufweist. Die Streifen werden dann spiralförmig gewickelt oder akkordeonartig gefaltet, um einen Monolithen zu bilden, und in geeigneter Weise an eine Spannungsquelle angeschlossen, um die Einheit mit Strom zu versorgen.

Der Strömungsquerschnitt der Abgasstrecke ist im Bereich der Heizscheibe des elektrischen Heizers durch die Metallfolien und die zwischen diesen ausgebildeten Strömungskanäle und den Luftspalt zwischen den Wicklungen besetzt. Die Metallfolien und aufgrund ihrer Größe auch die Strömungskanäle erzeugen einen Gegendruck, der dem Abgasstrom entgegenwirkt. Bei elektrischen Heizern mit metallischen Wabenkörpern, die aus dem Stand der Technik bekannt sind, kommt es aufgrund des vergleichsweisen hohen Druckverlustes infolge der Heizscheibe dazu, dass der Luftspalt bevorzugt vom Abgas durchströmt wird. Dies ist nachteilig, da dort keine oder nur eine geringe Aufheizung des Abgases stattfinden kann. Der größte Anteil der Wärmemenge wird in den Strömungskanälen auf das vorbeiströmende Abgas übertragen, da der elektrische Heizer dort die größte aktive Oberfläche besitzt.

### Darstellung der Erfindung, Aufgabe, Lösung, Vorteile

Daher ist es die Aufgabe der vorliegenden Erfindung einen Wabenkörper für einen elektrischen Heizer in einer Abgasstrecke eines Verbrennungsmotors zu schaffen, welcher ein verbessertes Durchströmungsprofil aufweist und insbesondere die vollständige Durchströmung der einzelnen zwischen den Metallfolien ausgebildeten Strömungskanäle sicherstellt.

Die Aufgabe hinsichtlich des Wabenkörpers wird durch einen Wabenkörper mit den Merkmalen von Anspruch 1 gelöst.

Ein Ausführungsbeispiel der Erfindung betrifft einen Wabenkörper für einen elektrisch beheizbaren Katalysator in einer Abgasstrecke, mit einer Mehrzahl von entlang einer Hauptdurchströmungsrichtig durchströmbaren Strömungskanälen, wobei der Wabenkörper aus einer Mehrzahl von zu einem Lagenstapel aufeinandergestapelten Metallfolien gebildet ist, der um zumindest einen Drehpunkt aufgewickelt ist, wobei der Lagenstapel zumindest eine erste Metallfolie aufweist, welche eine erste Wellung aufweist, und weiterhin zumindest eine zweite Metallfolie aufweist, welche ein zweite Wellung aufweist, wobei die erste Metallfolie und die zweite Metallfolie jeweils erste und zweite Welllagen ausbilden, wobei der Wabenkörper eine Mehrzahl von Wicklungslagen aufweist, die im aufgewickelten Zustand durch einen Luftspalt zueinander in radialer Richtung des Wabenkörpers beabstandet sind, wobei die erste Wellung ungleich der zweiten Wellung ist und der Lagenstapel mindestens drei Welllagen aufweist, wobei die Welllagen voneinander jeweils durch glatte oder mikrostrukturierte dritte Metallfolien getrennt sind.

Die Herstellung des Wabenkörpers erfolgt durch ein bekanntes Verfahren wobei die Metallfolien aufeinander gestapelt werden und der so erzeugte Lagenstapel um einen oder mehrere Wickeldorne aufgewickelt wird. Der Lagenstapel erzeugt dabei mehrere Wicklungslagen, die radial nebeneinander angeordnet sind und vom Wickelzentrum zum äußeren Radius des Wabenkörpers den Wabenkörper ausbilden. Im Fall eines elektrisch beheizbaren Wabenkörpers, wie im erfindungsgemäßen Fall, sind die einzelnen Wicklungslagen in radialer Richtung durch einen Luftspalt zueinander beabstandet, um einen physischen Kontakt der einzelnen Wicklungslagen zu verhindern und so insbesondere einen ungewollten Strompfad zu verhindern. Ziel ist es, dass der Wabenkörper von einem definierten Stromeinleitungspunkt zu einem definierten Stromausleitungspunkt von einem Strom durchflossen wird.

Die Metallfolien sind im Wesentlichen in zwei Kategorien zu unterteilen. Solche mit einer zumindest teilweisen Wellung und solche, die im Wesentlichen glatt sind oder nur eine sehr geringe Mikrostrukturierung aufweisen. Die zumindest teilweise gewellten Metallfolien weisen regelmäßig eine in etwa sinusförmige Wellung auf. Die Wellung ist definiert durch den sogenannten Pitch (p), welcher den Abstand auf der X-Achse zwischen zwei Minima beziehungsweise Maxima beschreibt. Außerdem ist die Wellung durch die Wellbreite (w), welche den Abstand auf der Y-Achse zwischen zwei Minima beziehungsweise zwei Maxima beschreibt. Die X-Achse der Wellung verläuft in Richtung der Höhe der Wellung, während die Y-Achse in Richtung der Breite der Wellung verläuft.

Durch die Wellung werden in dem Wabenkörper Zellen ausgebildet, durch welche der Wabenkörper entlang seiner axialen Richtung durchströmbar ist. Die Zellen werden in radialer Richtung durch die Metallfolien begrenzt. Die Dichte der Zelle pro Flächeneinheit wird in cells per square inch (cpsi), also Zellen pro Quadratinch angegeben. Je höher diese Zahl ist desto mehr Zellen sind in einem Quadratinch angeordnet. Eine hohe Anzahl an Zellen pro Quadratinch bedeutet einen kleineren Querschnitt der einzelnen Zellen und somit einen erhöhten Druckverlust.

Der erfindungsgemäße Wabenkörper hat zumindest zwei unterschiedliche Welllagen, die durch die Metallfolien mit den unterschiedlichen Wellungen ausgebildet sind. Zwangsläufig weisen so die unterschiedlichen Welllagen unterschiedliche Zelldichten pro Fläche auf. Die unterschiedlichen Welllagen erzeugen somit unterschiedlich große Druckverluste für ein durch die Zellen strömendes Medium, wie insbesondere einem Abgasstrom.

Mit Hinblick auf die erfindungswesentliche Bauform, welche in radialer Richtung zueinander beabstandete Wicklungslagen vorsieht, entstehen so mindestens drei Zonen unterschiedlich hohen Druckverlustes über den Querschnitt des Wabenkörpers hinweg. Einerseits die Luftspalte zwischen den Wicklungslagen, welche den geringsten Druckverlust erzeugen. Weiterhin die Welllagen mit einer niedrigen Dichte von Zellen pro Fläche und schließlich den Bereich der Welllagen mit einer hohen Dichte pro Fläche. Durch die Zonen unterschiedlichen Druckverlustes findet eine direkte Beeinflussung der Abgasströmung statt, wodurch eine verbesserte Durchströmung der elektrisch beheizten Bereiche des Wabenkörpers erreicht werden kann und so eine verbesserte Aufheizung des Abgases erreicht werden kann.

Besonders vorteilhaft ist es, wenn die erste Metallfolie eine geringere Wellung aufweist als die zweiten Metallfolien.

Die unterschiedliche Wellung führt, wie bereits beschrieben, zu einer verbesserten Durchströmung des Wabenkörpers und somit zu einer verbesserten Aufheizung des Abgases. Mit einer geringeren Wellung ist insbesondere eine Wellung gemeint, die eine geringere Wellhöhe und/oder eine geringere Wellbreite aufweist, wodurch eine Welllage mit einer höheren Zelldichte pro Fläche erreicht wird. Die Zelldichte der Welllagen sollte sich bevorzugt in einem Bereich von 20 cpsi bis 500 cpsi bewegen, um eine optimale Durchströmung der Zellen sicherzustellen.

Die aus der ersten Metallfolie gebildeten Welllagen weisen bevorzugt, im Falle der Welllage aus der ersten Metallfolie, eine Zelldichte von 100 cpsi bis 150 cpsi auf beziehungsweise, im Falle der Welllage aus der zweiten Metallfolie, eine Zelldichte von 25 cpsi und 85 cpsi auf. Diese Zelldichten sind besonders vorteilhaft, um für Wabenkörper zur Aufheizung von Abgasen eines Verbrennungsmotors vorteilhafte Zelldichten zu erreichen, die eine besonders gleichmäßige und vollständige Durchströmung der Zellen des Wabenkörpers erlauben.

Besonders vorteilhaft weist der Wabenkörper eine Porosität von 94% bis 97% auf. Wobei der hydraulische Durchmesser der einzelnen Zellen bevorzugt zwischen 2mm und 5mm liegt.

Auch ist es vorteilhaft, wenn die Welllage, die aus einer ersten Metallfolie gebildet ist, zur Aufnahme von Tragstrukturen dient. Die Welllage aus einer ersten Metallfolie weist die höhere Zelldichte auf und somit Zellen mit einem kleineren hydraulischen Querschnitt. Die Welllagen sind bevorzugt dazu ausgebildet die Stützstifte aufzunehmen, mit welchen der Wabenkörper elektrisch isoliert gegenüber einem anderen Katalysator abgestützt wird.

Ein bevorzugtes Ausführungsbeispiel ist dadurch gekennzeichnet, dass die Welllage, die aus einer zweiten Metallfolie gebildet ist, der Erhöhung der Steifigkeit des Wabenkörpers dient. Durch die niedrigere Zelldichte können Welllagen mit einer höheren Steifigkeit erzeugt werden. Diese Welllagen sind insbesondere, wenn sie die Randlagen des Lagenstapels bilden besonders geeignet, um einen sehr formstabilen Wabenkörper zu erzeugen.

Auch ist es zu bevorzugen, wenn der den Wabenkörper bildende Lagenstapel mindestens drei Welllagen aufweist, wobei zumindest eine mittlere Welllage durch eine erste Metallfolie ausgebildet ist und zumindest die beiden die radialen Ränder des Lagenstapels bildenden Welllagen durch jeweils eine zweite Metallfolie ausgebildet sind.

Die mittlere Welllage aus einer ersten Metallfolie weist die im Vergleich höhere Zelldichte auf und dient zur Aufnahme der Stützstrukturen, wie insbesondere der Stützstifte. Diese Welllage bildet bevorzugt die zentrale Welllage des Lagenstapels, während beidseitig sich Welllagen anschließen, die aus zweiten Metallfolien erzeugt sind. Diese weisen eine geringere Zelldichte auf, bieten somit einen niedrigeren Widerstand für das durchströmende Abgas und sind darüber hinaus steifer, wodurch eine verbesserte Formbeständigkeit des Wabenkörpers erreicht werden kann.

Zwischen den Welllagen aus der ersten Metallfolie und den Welllagen der zweiten Metallfolie sind bevorzugt Glattlagen oder sogenannten mikrostrukturierte Lagen angeordnet, welche die Welllagen voneinander trennen und insbesondere das Ineinander rutschen der benachbarten Welllagen vermeiden.

Darüber hinaus ist es vorteilhaft, wenn der den Wabenkörper bildende Lagenstapel genau drei Welllagen aufweist, wobei aufeinanderfolgend eine dritte Metallfolie, eine zweite Metallfolie, eine dritte Metallfolie, eine erste Metallfolie, eine dritte Metallfolie, eine zweite Metallfolie und eine dritte Metallfolie innerhalb des Lagenstapels angeordnet sind. Die zentrale Welllage aus der ersten Metallfolie bildet die Aufnahme für die Stützstifte aus. Die beiden sich seitlich anschließenden Welllagen aus den zweiten Metallfolien erhöhen die Stabilität und senken gleichzeitig den am Randbereich entstehenden Druckverlust, wodurch insbesondere das Durchströmen des zwischen den Wickellagen ausgebildeten Luftspaltes vermieden beziehungsweise deutlich reduziert wird.

Insgesamt ist der Aufbau des Lagenstapels aus drei Welllagen optimal, um einerseits eine möglichst hohe Wirksamkeit zum Aufheizen des Abgases zu erreichen und andererseits die Kosten und den Herstellungsaufwand möglichst gering zu halten. Darüber hinaus ist bei den üblichen Größenverhältnissen des Wabenkörpers zur Aufheizung von Abgas im Abgasstrang eines PKW beziehungsweise eines LKW besonders vorteilhaft einen dreilagigen Aufbau zu wählen. Es lässt sich so besonders gut der nötige Ohmsche Widerstand einstellen, um mit den zur Verfügung stehenden elektrischen Strömen eine ausreichend schnelle und starke Aufheizung des Abgases zu erreichen.

Weiterhin ist es vorteilhaft, wenn die zweiten Metallfolien jeweils eine Welllage bilden, welche eine Wellung mit größere Wellhöhe und/oder größerer Wellbreite aufweisen, als die zumindest eine von einer ersten Metallfolie gebildeten Welllage.

Sowohl die Variation der Wellhöhe kann zu einer Verringerung der Zelldichte pro Fläche beitragen. Ebenso kann dies über die Variation der Wellbreite erreicht werden. Bevorzugt weisen die Randlagen eine im Vergleich zu den zentralen Lagen geringere Zelldichte pro Fläche auf, wodurch gezielt die Durchströmung der Zellen des Wabenkörpers verbessert wird und das Vorbeiströmen des Abgases durch die ausgebildeten Luftspalte vermindert oder verhindert wird.

Auch ist es zweckmäßig, wenn die den radialen Randbereich des Lagenstapels bildenden Welllagen einen geringeren Druckverlust für ein hindurchströmendes Fluid erzeugen als die im Zentrum des Lagenstapels angeordneten Welllagen.

Darüber hinaus ist es vorteilhaft, wenn die Zelldichte der durch die ersten Metallfolien gebildeten Welllagen zwischen 100 cpsi (cells per square inch) und 150 cpsi beträgt und die Zelldichte der durch die zweiten Metallfolien gebildeten Welllagen zwischen 25 cpsi und 80 cpsi beträgt. Dieses Verhältnis der Zelldichten bildet insbesondre für PKW und LKW Anwendungen ein zu bevorzugendes Optimum an für die gewöhnlichen Baugrößen, die Strömungsgeschwindigkeiten, die Temperaturen und die zur Beheizung zur Verfügung stehenden elektrischen Ströme.

Weiterhin ist es zweckmäßig, wenn zumindest eine erste Gruppe der zweiten Metallfolien vorgesehen ist, die ein Verhältnis (p/W) von Wellhöhe (p) zu Wellbreite (W) von kleiner als 1,8 aufweist und/oder zumindest eine zweite Gruppe der zweiten Metallfolien vorgesehen ist, die ein Verhältnis (p/W) von Wellhöhe (p) zu Wellbreite (W) von größer als 1,8 aufweist.

Das Verhältnis p/W ist dabei ein wesentlicher Faktor für die Gestalt der jeweiligen Welllage. Je größer das Verhältnis ist, umso flacher wird die Welle, wodurch die Lage insbesondere in Y-Richtung, also in der Richtung quer zur Wellung, flexibler wird, wodurch die Welllage einfacher aufzuwickeln ist, aber gleichzeitig auch anfälliger für ungewollte Verformungen und Beschädigungen.

Ein sehr niedriges Verhältnis von p/W führt zu einer hohen Wellung, wodurch die Flexibilität in Y-Richtung reduziert wird und eine höhere Steifigkeit der Welllage erreicht wird.

Es hat sich durch umfangreiche Untersuchungen herausgestellt, dass im Bereich um die Zahl 1,8 für das Verhältnis von p/W der Wendepunkt hinsichtlich der Stabilität der Welllage ist. Für ein Verhältnis unterhalb von 1,8 tendiert die Welllage dazu steif zu sein, was gut ist hinsichtlich der Stabilität, da die Welllage nicht so leicht mechanische verformt werden kann, wodurch Zellen beschädigt oder verschlossen werden könnten. Für Verhältnisse oberhalb von 1,8 neigt die Welllage dazu weich zu sein, was vorteilhaft ist, um radiale Kräfte und Spannungen aufzunehmen, und so die Dauerhaltbarkeit der Welllage beziehungsweise des Wabenkörpers sicherzustellen.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von einem Ausführungsbeispiel unter Bezugnahme auf die Zeichnung detailliert erläutert. In der Zeichnung zeigt:

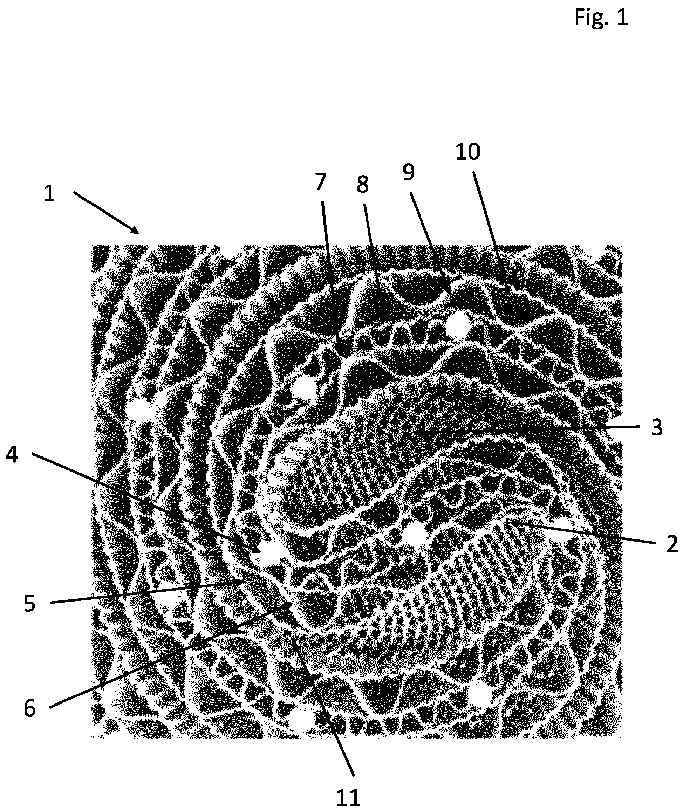

- Fig. 1: eine Ansicht auf einen erfindungsgemäßen Wabenkörper, wobei die von dem Wabenkörper ausgebildeten Strömungskanäle entlang einer Flächennormalen zur Zeichnungsebene verlaufen.

### Bevorzugte Ausführung der Erfindung

Die Figur 1 zeigt eine Aufsicht auf einen Wabenkörper 1, welcher aus einem Lagenstapel 2 durch Aufwickeln gebildet ist. Der Lagenstapel 2 ist mittels Stützstiften 4 gegenüber einem dahinter angeordneten Katalysator 3 abgestützt.

Der Lagenstapel 2 ist um zwei Wickeldorne aufgewickelt, wodurch der Lagenstapel 2 einen s-förmigen Verlauf aufweist. Die einzelnen Wickellagen sind durch den Luftspalt 11 in radialer Richtung zueinander beabstandet.

Der Lagenstapel 2 weist eine zentrale Welllage auf, welche aus einer ersten Metallfolie 7 gebildet ist. Eingefasst ist diese Welllage durch dritte Metallfolien 5, 10, welche eine Mikrostrukturierung aufweisen. Alternativ wäre auch eine vollkommen glatte dritte Metallfolie vorsehbar.

An die dritten Metallfolien 5, 10 schließen sich zwei Welllagen aus zweiten Metallfolien 6, 9 an. Die zweiten Metallfolien 6, 9 haben einer etwas größerer Wellhöhe (pitch) und einer wesentlich größerer Wellbreite, wodurch die durch die zweiten Metallfolien 6, 9 gebildeten Welllagen eine niedrigere Zelldichte aufweisen als die durch die erste Metallfolie 5, 10 gebildete Welllage.

An die zweiten Metallfolien 6, 9 schließen sich jeweils wieder dritte Metallfolien 5, 10 an, welche ebenfalls eine Mikrostrukturierung aufweisen und in alternativen Ausgestaltungen auch durch vollständig glatte Metallfolien gebildet sein könnten.

Der Luftspalt 11 dient zur elektrischen Trennung der einzelnen Wickellagen voneinander und damit der Verhinderung von Kurzschlüssen und unerwünschten Stromleitungspfaden.

Das Ausführungsbeispiel der Figur 1 weist insbesondere keinen beschränkenden Charakter auf und dient der Verdeutlichung des Erfindungsgedankens.

### Bezugszeichenliste

- 1.: Wabenkörper
- 2.: Lagenstapel
- 3.: Wabenkörper
- 4.: Stützstift
- 5.: Dritte Metallfolie
- 6.: Zweite Metallfolie
- 7.: Erste Metallfolie
- 8.: Dritte Metallfolie
- 9.: Zweite Metallfolie
- 10.: Dritte Metallfolie
- 11.: Luftspalt

## Patentansprüche

1. Wabenkörper (1) für einen elektrisch beheizbaren Katalysator in einer Abgasstrecke, mit einer Mehrzahl von entlang einer Hauptdurchströmungsrichtig durchströmbaren Strömungskanälen, wobei der Wabenkörper (1) aus einer Mehrzahl von zu einem Lagenstapel (2) aufeinandergestapelten Metallfolien (5, 6, 7, 8, 9, 10) gebildet ist, der um zumindest einen Drehpunkt aufgewickelt ist, wobei der Lagenstapel (2) zumindest eine erste Metallfolie (7) aufweist, welche eine erste Wellung aufweist, und weiterhin zumindest eine zweite Metallfolie ( 6, 9) aufweist, welche ein zweite Wellung aufweist, wobei die ersten Metallfolie (7) und die zweiten Metallfolie (6, 9) jeweils erste und zweite Welllagen ausbilden, wobei der Wabenkörper (1) eine Mehrzahl von Wicklungslagen aufweist, die im aufgewickelten Zustand durch einen Luftspalt (11) zueinander in radialer Richtung des Wabenkörpers (1) beabstandet sind, wobei die erste Wellung ungleich der zweiten Wellung ist, **dadurch gekennzeichnet, dass** der Lagenstapel (2) mindestens drei Welllagen aufweist, wobei die Welllagen voneinander jeweils durch glatte oder mikrostrukturierte dritte Metallfolien (5, 10) getrennt sind.

2. Wabenkörper (1) nach Anspruch 1, **dadurch gekennzeichnet , dass** die erste Metallfolie (7) eine geringere Wellung aufweist als die zweiten Metallfolien (6, 9).

3. Wabenkörper (1) nach einem der vorhergehenden Ansprüche, **dadurch gekennzeichnet , dass** die Welllage, die aus einer ersten Metallfolie (7) gebildet ist, zur Aufnahme von Tragstrukturen (4) dient.

4. Wabenkörper (1) nach einem der vorhergehenden Ansprüche, **dadurch gekennzeichnet , dass** die Welllage, die aus einer zweiten Metallfolie (6, 9) gebildet ist, der Erhöhung der Steifigkeit des Wabenkörpers (1) dient.

5. Wabenkörper (1) nach einem der vorhergehenden Ansprüche, **dadurch gekennzeichnet , dass** der den Wabenkörper (1) bildende Lagenstapel (2) mindestens drei Welllagen aufweist, wobei zumindest eine mittlere Welllage durch eine erste Metallfolie (7) ausgebildet ist und zumindest die beiden die radialen Ränder des Lagenstapels (2) bildenden Welllagen durch jeweils eine zweite Metallfolie (6, 9) ausgebildet sind.

6. Wabenkörper (1) nach einem der vorhergehenden Ansprüche, **dadurch gekennzeichnet , dass** der den Wabenkörper (1) bildende Lagenstapel (2) genau drei Welllagen aufweist, wobei aufeinanderfolgend eine dritte Metallfolie (5, 8), eine zweite Metallfolie (6, 9), eine dritte Metallfolie (5, 8), eine erste Metallfolie (7), eine dritte Metallfolie (5, 8), eine zweite Metallfolie (6, 9) und eine dritte Metallfolie (5, 8) innerhalb des Lagenstapels (2) angeordnet sind.

7. Wabenkörper (1) nach einem der vorhergehenden Ansprüche, **dadurch gekennzeichnet , dass** die zweiten Metallfolien (6, 9) jeweils eine Welllage bilden, welche eine Wellung mit größere Wellhöhe und/oder größerer Wellbreite aufweisen, als die zumindest eine von einer ersten Metallfolie (7) gebildeten Welllage.

8. Wabenkörper (1) nach einem der vorhergehenden Ansprüche, **dadurch gekennzeichnet, dass** die den radialen Randbereich des Lagenstapels (2) bildenden Welllagen einen geringeren Druckverlust für ein hindurchströmendes Fluid erzeugen als die im Zentrum des Lagenstapels (2) angeordneten Welllagen.

9. Wabenkörper (1) nach einem der vorhergehenden Ansprüche, **dadurch gekennzeichnet, dass** die Zelldichte der durch die ersten Metallfolien (7) gebildeten Welllagen zwischen 100 cpsi (cells per square inch) und 150 cpsi beträgt und die Zelldichte der durch die zweiten Metallfolien (6, 9) gebildeten Welllagen zwischen 25 cpsi und 80 cpsi beträgt.

10. Wabenkörper (1) nach einem der vorhergehenden Ansprüche, **dadurch gekennzeichnet , dass** zumindest eine erste Gruppe der zweiten Metallfolien (6, 9) vorgesehen ist, die ein Verhältnis (p/w) von Wellhöhe (p) zu Wellbreite (w) von kleiner als 1,8 aufweist und/oder zumindest eine zweite Gruppe der zweiten Metallfolien (6, 9) vorgesehen ist, die ein Verhältnis (p/w) von Wellhöhe (p) zu Wellbreite (w) von größer als 1,8 aufweist.

## Claims

1. Honeycomb body (1) for an electrically heatable catalytic converter in an exhaust gas tract, having a plurality of flow channels through which flow can occur along a main through flow direction, wherein the honeycomb body (1) is formed from a plurality of metal foils (5, 6, 7, 8, 9, 10) stacked on one another to form a layer stack (2), which is wound around at least one pivot point, wherein the layer stack (2) has at least one first metal foil (7) which has a first corrugation, and furthermore has at least one second metal foil (6, 9) which has a second corrugation, wherein the first metal foil (7) and the second metal foil (6, 9) respectively form first and second corrugated layers, wherein the honeycomb body (1) has a plurality of winding layers, which are spaced apart from one another in the radial direction of the honeycomb body (1) in the wound state by an air gap (11), wherein the first corrugation is different from the second corrugation, **characterized in that** the layer stack (2) has at least three corrugated layers, wherein the corrugated layers are each separated from one another by smooth or microstructured third metal foils (5, 10).

2. Honeycomb body (1) according to Claim 1, **characterized in that** the first metal foil (7) has a lesser corrugation than the second metal foils (6, 9).

3. Honeycomb body (1) according to one of the preceding claims, **characterized in that** the corrugated layer which is formed from a first metal foil (7) is used to accommodate support structures (4).

4. Honeycomb body (1) according to one of the preceding claims, **characterized in that** the corrugated layer which is formed from a second metal foil (6, 9) is used to increase the rigidity of the honeycomb body (1).

5. Honeycomb body (1) according to one of the preceding claims, **characterized in that** the layer stack (2) forming the honeycomb body (1) has at least three corrugated layers, wherein at least one middle corrugated layer is formed by a first metal foil (7) and at least the two corrugated layers forming the radial edges of the layer stack (2) are each formed by a second metal foil (6, 9).

6. Honeycomb body (1) according to one of the preceding claims, **characterized in that** the layer stack (2) forming the honeycomb body (1) has precisely three corrugated layers, wherein in succession a third metal foil (5, 8), a second metal foil (6, 9), a third metal foil (5, 8), a first metal foil (7), a third metal foil (5, 8), a second metal foil (6, 9), and a third metal foil (5, 8) are arranged inside the layer stack (2).

7. Honeycomb body (1) according to one of the preceding claims, **characterized in that** the second metal foils (6, 9) each form a corrugated layer, which has a corrugation having greater wave height and/or greater wave width than the at least one corrugated layer formed by a first metal foil (7).

8. Honeycomb body (1) according to one of the preceding claims, **characterized in that** the corrugated layers forming the radial edge area of the layer stack (2) generate a lower pressure loss for a fluid flowing through than the corrugated layers arranged in the centre of the layer stack (2).

9. Honeycomb body (1) according to one of the preceding claims, **characterized in that** the cell density of the corrugated layers formed by the first metal foils (7) is between 100 cpsi (cells per square inch) and 150 cpsi and the cell density of the corrugated layers formed by the second metal foils (6, 9) is between 25 cpsi and 80 cpsi.

10. Honeycomb body (1) according to one of the preceding claims, **characterized in that** at least one first group of the second metal foils (6, 9) is provided which has a ratio (p/w) of wave height (p) to wave width (w) of less than 1.8 and/or at least one second group of the second metal foils (6, 9) is provided which has a ratio (p/w) of wave height (p) to wave width (w) of greater than 1.8.

## Revendications

1. Corps en nids d'abeille (1) pour un catalyseur pouvant être chauffé électriquement dans une ligne d'échappement, avec une multitude de canaux d'écoulement pouvant être traversés le long d'une direction d'écoulement traversant principale, le corps en nids d'abeille (1) étant formé à partir d'une multitude de feuilles en métal (5, 6, 7, 8, 9, 10) empilées les unes sur les autres en une pile (2) de couches, qui est enroulée autour d'au moins un point de rotation, la pile (2) de couches comportant au moins une première feuille en métal (7), qui comporte une première ondulation, et comportant par ailleurs au moins une deuxième feuille en métal (6, 9), qui comporte une deuxième ondulation, la première feuille en métal (7) et la deuxième feuille en métal (6, 9) formant chacune des premières et deuxièmes couches ondulées, le corps en nids d'abeille (1) comportant une multitude de couches d'enroulement qui sont espacées dans la direction radiale du corps en nids d'abeille (1) les unes par rapport aux autres par un entrefer (11) dans l'état enroulé, la première ondulation étant différente de la deuxième ondulation, **caractérisé en ce que** la pile (2) de couches comporte au moins trois couches ondulées, les couches ondulées étant séparées les unes des autres respectivement par des troisièmes feuilles en métal (5, 10) lisses ou microstructurées.

2. Corps en nids d'abeille (1) selon la revendication 1, **caractérisé en ce que** la première feuille en métal (7) comporte une ondulation plus modérée que les deuxièmes feuilles en métal (6, 9).

3. Corps en nids d'abeille (1) selon l'une des revendications précédentes, **caractérisé en ce que** la couche ondulée, qui est formée à partir d'une première feuille en métal (7), sert à recevoir des structures de support (4).

4. Corps en nids d'abeille (1) selon l'une des revendications précédentes, **caractérisé en ce que** la couche ondulée, qui est formée à partir d'une deuxième feuille en métal (6, 9), sert à augmenter la rigidité du corps en nids d'abeille (1).

5. Corps en nids d'abeille (1) selon l'une des revendications précédentes, **caractérisé en ce que** la pile (2) de couches formant le corps en nids d'abeille (1) comporte au moins trois couches ondulées, au moins une couche ondulée centrale étant formée par une première feuille en métal (7) et au moins les deux couches ondulées formant les bords radiaux de la pile (2) de couches étant formées par respectivement un deuxième film en métal (6, 9).

6. Corps en nids d'abeille (1) selon l'une des revendications précédentes, **caractérisé en ce que** la pile (2) de couches formant le corps en nids d'abeille (1) comporte précisément trois couches ondulées, une troisième feuille en métal (5, 8), une deuxième feuille en métal (6, 9), une troisième feuille en métal (5, 8), une première feuille en métal (7), une troisième feuille en métal (5, 8), une deuxième feuille en métal (6, 9) et une troisième feuille en métal (5, 8) étant disposées à l'intérieur de la pile (2) de couche de manière consécutive.

7. Corps en nids d'abeille (1) selon l'une des revendications précédentes, **caractérisé en ce que** les deuxièmes feuilles en métal (6, 9) forment chacune une couche ondulée, lesquelles comportent une ondulation avec une hauteur d'ondulation plus importante et/ou une largeur d'ondulation plus importante que l'au moins une couche ondulée formée par une première feuille en métal (7).

8. Corps en nids d'abeille (1) selon l'une des revendications précédentes, **caractérisé en ce que** les couches ondulées formant la zone de bord radiale de la pile (2) de couches génèrent une perte de pression inférieure pour un fluide traversant que les couches ondulées disposées au centre de la pile (2) de couches.

9. Corps en nids d'abeille (1) selon l'une des revendications précédentes, **caractérisé en ce que** la densité de cellules des couches ondulées formées par les premières feuilles en métal (7) est comprise entre 100 cpsi (cellules par pouce carré) et 150 cpsi et la densité de cellules des couches ondulées formées par les deuxièmes feuilles en métal (6, 9) est comprise entre 25 cpsi et 80 cpsi.

10. Corps en nids d'abeille (1) selon l'une des revendications précédentes, **caractérisé en ce qu'**au moins un premier groupe des deuxièmes feuilles en métal (6, 9) est prévu, qui comporte un rapport (p/w) de la hauteur d'ondulation (p) par rapport à la largeur d'ondulation (w) inférieur à 1,8 et/ou au moins un deuxième groupe des deuxièmes feuilles en métal (6, 9) est prévu, qui comporte un rapport (p/w) de la hauteur d'ondulation (p) par rapport à la largeur d'ondulation (w) supérieur à 1,8.
